(19) Europäisches Patentamt
European Patent Office
Office européen des brevets

(11) **EP 0 987 077 A2**

(12) **EUROPÄISCHE PATENTANMELDUNG**

(43) Veröffentlichungstag:
22.03.2000 Patentblatt 2000/12

(51) Int. Cl.$^7$: **B23H 3/02**

(21) Anmeldenummer: **99115278.6**

(22) Anmeldetag: **02.08.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **17.08.1998 DE 19837126**

(71) Anmelder:
**FORSCHUNGSZENTRUM JÜLICH GMBH
52425 Jülich (DE)**

(72) Erfinder:
• **Marso, Michael, Dr.
52428 Jülich (DE)**
• **Arens-Fischer, Rüdiger
52066 Aachen (DE)**
• **Lüth, Hans, Prof. Dr.
52076 Aachen (DE)**

(74) Vertreter: **Möbus, Steffen
Kayser & Möbus
Patentanwälte
Otto-Krafft-Platz 24
59065 Hamm (DE)**

(54) **Verfahren und Vorrichtung zur elektrischen oder elektrochemischen Manipulation von Proben**

(57)    Es wird ein Verfahren und eine Vorrichtung zur gleichzeitigen elektrischen oder elektrochemischen Manipulation mehrerer Materialproben (4.1 - 4.4) beschrieben. Bei dieser Manipulation handelt es sich beispielsweise um elektrochemisches Ätzen Elektropolieren Galvanisieren und insbesondere um eine anodische Ätzung zur Herstellung von porösem Silizium. Die zu behandelnden Materialproben (4.1 - 4.4) werden dabei in ein gemeinsames Behandlungsbecken (1) gebracht und individuell mit steuerbaren Stromquellen (7.1 - 7.4) verbunden, so daß eine gleichzeitige und doch individuelle Bearbeitung der einzelnen Proben möglich ist. Das Verfahren und die Vorrichtung können auch auf eine großflächige Materialprobe angewandt werden, die über verschiedene Kontaktstellen mit individuell steuerbaren Stromquellen verbunden ist. Dadurch ist eine unterschiedliche Bearbeitung einzelner Bereiche der großflächigen Materialprobe möglich.

Fig. 1

EP 0 987 077 A2

**Beschreibung**

Die vorliegende Erfindung betrifft ein Verfahren und eine Vorrichtung zur elektrischen oder elektrochemischen Manipulation von Materialproben. Bei dieser Manipulation kann es sich beispielsweise um elektrochemisches Ätzen, Elektropolieren oder Galvanisieren handeln. Das erfindungsgemäße Verfahren und die erfindungsgemäße Vorrichtung können insbesondere zur Herstellung von porösem Silizium verwendet werden.

Die Herstellung von porösem Silizium erfolgt über ein bekanntes Verfahren, bei dem einkristallines oder polykristallines oder amorphes Silizium durch ein sogenanntes anodisches Ätzverfahren hergestellt wird. Dabei wird die zu ätzende Probe in eine Ätzzelle eingetaucht, die mit einem Elektrolyten gefüllt ist. Gegenüber der Probe befindet sich eine, ebenfalls in den Elektrolyten eingetauchte Elektrolyt-Elektrode. Die Probe ist über einen Kontakt mit einer ansteuerbaren Stromquelle verbunden und kann über diese mit einem einstellbaren Strom beaufschlagt werden.

Die Porösität des sich ergebenden porösen Siliziums und damit auch der optische Brechungsindex können unter anderem durch die Größe des Ätzstromes bestimmt werden. Durch eine zeitliche Variation dieses Stromes können beliebige Brechungsindexverläufe hergestellt werden. Damit eignet sich dieses Verfahren sehr gut zur Herstellung komplexer Filterstrukturen, wie beispielsweise zur Herstellung von sogenannten "Rugate-Filtern".

Bei den bisher bekannten Verfahren und Vorrichtungen erfolgte die Manipulation der Proben einzeln in einer Zelle. Bei der hier insbesondere betrachteten Herstellung von porösem Silizium durch anodische Ätzung wurde die Probe bisher einzeln in der Ätzzelle angeordnet, und dann das Ätzen durchgeführt. Bei der Ätzung mehrerer Proben konnten automatische Bestückungsmaschinen verwendet werden, mit denen die Ätzzellen automatisch bestückt wurden. Dies erhöht den Durchsatz und verringert die menschliche Arbeitszeit. Nachteilig daran ist, daß solche automatischen Bestückungsmaschinen teuer und wartungsintensiv sind. Eine andere Möglichkeit zur Herstellung mehrerer Proben porösen Siliziums besteht darin, eine große Probenfläche zu porösidieren und diese anschließend in eine Vielzahl kleiner Proben zu teilen. Bei diesem Vorgehen ist aber zu beachten, daß eine gleichmäßige Stromdichte auf einer großen Probenfläche schwerer zu verwirklichen ist als auf kleinen Flächen. Der Brechungsindex des porösen Siliziums und damit die Qualität der hergestellten Filter hängen jedoch stark von der Stromdichte ab. Außerdem ist das Teilen der großflächigen Probe mit porösem Silizium wegen seiner Zerbrechlichkeit nicht einfach.

Aufgabe der vorliegenden Erfindung ist es daher, ein Verfahren und eine Vorrichtung zur elektrischen oder elektrochemischen Manipulation mehrerer Proben zu schaffen, wobei die oben angegebenen Nachteile vermieden werden. Insbesondere sollen ein Verfahren und eine Vorrichtung zur anodischen Ätzung von Silizium für die Herstellung porösen Siliziums, bei denen mehrere Proben gleichzeitig bearbeitet werden können, geschaffen werden. Gelöst wird diese Aufgabe gemäß dem Verfahren nach Anspruch 1 und der Vorrichtung nach Anspruch 10, dadurch daß mehrere Proben in die Zelle mit dem Elektrolyt eingetaucht werden, wobei die Proben einzeln über Stromquellen mit Strömen beaufschlagt werden.

Eine weitere Aufgabe der vorliegenden Erfindung besteht darin, ein Verfahren und eine Vorrichtung zur elektrischen oder elektrochemischen Manipulation, insbesondere zur anodischen Ätzung von Silizium für die Herstellung porösen Siliziums, einer großflächigen Probe zu schaffen, wobei eine gewünschte Verteilung der Stromdichte individuell und zuverlässig eingestellt werden kann. Gelöst wird diese Aufgabe gemäß dem Verfahren nach Anspruch 6 und der Vorrichtung nach Anspruch 11, dadurch daß die großflächige Probe über mehrere elektrische Kontakte mit Strömen beaufschlagt wird.

Beim erfindungsgemäßen Verfahren und der erfindungsgemäßen Vorrichtung zur gleichzeitigen Bearbeitung mehrerer Proben werden diese Proben gleichzeitig in eine gemeinsame Ätzzelle eingetaucht, so daß sie einer gemeinsamen Elektrolytelektrode oder mehreren gemeinsamen Elektrolytelektroden gegenüberstehen. Jede der Proben wird über einen Kontakt auf der der gemeinsamen Elektrode abgewandten Seite mit einem individuell steuerbaren Strom beaufschlagt. Dadurch können die einzelnen Proben unabhängig voneinander bearbeitet, also bei der Herstellung von porösem Silizium unabhängig voneinander porösidiert werden. Die Ströme können dabei sowohl in ihrer Größe als auch in ihrem zeitlichen Verlauf individuell gesteuert werden. Es kann somit die Porösität des porösidierten Siliziums individuell gestaltet werden. Sollen die Proben alle mit demselben Strom beaufschlagt werden, wie beispielsweise bei der Herstellung von gleichartigen Filtern, so kann die geforderte Vielzahl gleichartiger gesteuerter Stromquellen durch eine elektrische Stromspiegelschaltung erzeugt werden. Dadurch wird nur eine einzige von außen, beispielsweise über einen Rechner, gesteuerte Strom- oder Spannungsquelle benötigt, was die apparitiven Kosten erheblich senkt. Durch die Einführung modifizierter Stromquellen können beispielsweise auch gleiche Stromdichten bei unterschiedlichen Probenflächen eingestellt werden.

Beim erfindungsgemäßen Verfahren und der erfindungsgemäßen Vorrichtung zur Bearbeitung einer großflächigen Probe wird diese Probe wiederum in die Ätzzelle eingetaucht, so daß sie einer gemeinsamen Elektrolytelektrode oder mehreren gemeinsamen Elektrolytelektroden gegenüberstehen. Bei dem aus dem Stand der Technik bekannten Verfahren wurde die Probe bisher mit ihrer der gemeinsamen Elektrolytelektrode oder den gemeinsamen Elektrolytelektroden abgewandten Seite ganzflächig auf eine Metallplatte gelegt. Sofern nicht Probe und Platte ideal eben und sauber sind, gibt es nur einige wenige gute Kontaktstellen. Besonders bei großflächigen Proben kann sich dabei eine ungleichförmige Stromverteilung ergeben. Beim erfindungsgemäßen Verfahren und der erfindungsgemäßen Vorrichtung wird dabei die einzelne große Metallplatte durch eine Vielzahl kleiner Planen ersetzt, die einzeln mit der Probe kontaktiert werden. Jede der kleinen Platten ergibt somit eine gute Kontaktstelle. Bei einer gleichmäßigen Verteilung der Platten über der Probe werden somit die Kontaktstellen gleichmäßig über die Probe verteilt. Durch den Einsatz von je einer Stromquelle für jede Metallplatte, das heißt, für jede Kontaktstelle, kann eine gleichförmige Stromeinspeisung erzielt werden. Je nach Bedarf kann durch eine unterschiedliche Ansteuerung der Stromquellen die Stromdichte für unterschiedliche Probenbereiche erhöht oder erniedrigt werden. Beispielsweise kann die Stromdichte zum Rand der Probe hin verkleinert werden, um Inhomogenitäten am Rande auszugleichen.

Werden bei einer großflächigen Probe, die Probenbereiche der einzelnen Stromeinspeisungen, elektrisch voneinander isoliert, beispielsweise durch eine Gegendotierung mittels Ionenimplantation oder Diffusion oder durch Ätzen, so können die Bereiche individuell bearbeitet werden, das heißt, es können in ihnen beispielsweise unterschiedliche Prioritätsverläufe erstellt werden.

Der Aufbau und die Funktionsweise der erfindungsgemäßen Vorrichtung werden nachstehend am Beispiel eines anodischen Ätzens zur Herstellung von porösem Silizium anhand der in den Figuren gezeigten Ausführungsbeispiele näher erläutert.

Es zeigen:

Fig. 1 eine erfindungsgemäße Vorrichtung zur gleichzeitigen Bearbeitung von vier Proben;

Fig. 2 eine erfindungsgemäße Vorrichtung zur Bearbeitung einer großflächigen Probe; und

Figuren 3a - 3c verschiedene Stromquellenschaltungen zur steuerbaren Stromeinspeisung in die zu bearbeitende Probe oder die zu bearbeitenden Proben.

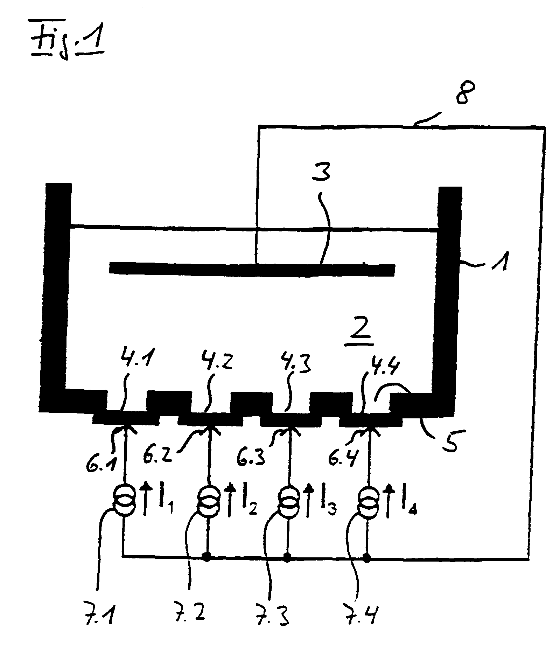

Figur 1 zeigt eine erfindungsgemäße Vorrichtung zur gleichzeitigen Bearbeitung von vier Proben. Die Vorrichtung umfaßt eine Ätzzelle 1, die mit einem Elektrolyten 2 gefüllt ist. In die Zelle wird eine gemeinsame Elektrolyt-Elektrode 3 eingetaucht. Es können statt der einen gemeinsamen Elektrolyt-Elektrode auch mehrere gemeinsame Elektrolyt-Elektroden vorhanden sein. In der Ätzzelle 1 sind gegenüber der Elektrolyt-Elektrode 3 die gleichzeitig zu bearbeitenden Proben 4 angeordnet. In diesem Beispiel sind vier Proben 4.1 - 4.4 dargestellt. Sie sind hier in entsprechenden Öffnungen 5 der Ätzzelle 4 so angeordnet, daß ihre eine Seite, die Vorderseite, nach oben zur Elektrolyt-Elektrode 3 weist und mit dem Elektrolyten 2 in Berührung steht, während ihre andere Seite, die Rückseite, über Rückseitenkontakte 6.1 - 6.4 jeweils mit einer individuellen Stromquelle 7.1 - 7.4 verbunden ist. Eine Leitung 8 verbindet die gemeinsame Elektrolyt-Elektrode 3 mit den Stromquellen 7.1 - 7.4, so daß die gemeinsame Elektrolyt-Elektrode 3 und die Proben 4.1 - 4.4 eine entgegengesetzte Polarität aufweisen. Mit dieser Vorrichtung können mehrere Proben, im hier dargestellten Beispiel 4 Proben, gleichzeitig bearbeitet werden, wobei aber durch die Zuordnung einer individuellen, steuerbaren Stromquelle 7.1 - 7.4 zu jeder Probe 4.1 jede Probe individuell bearbeitet werden kann.

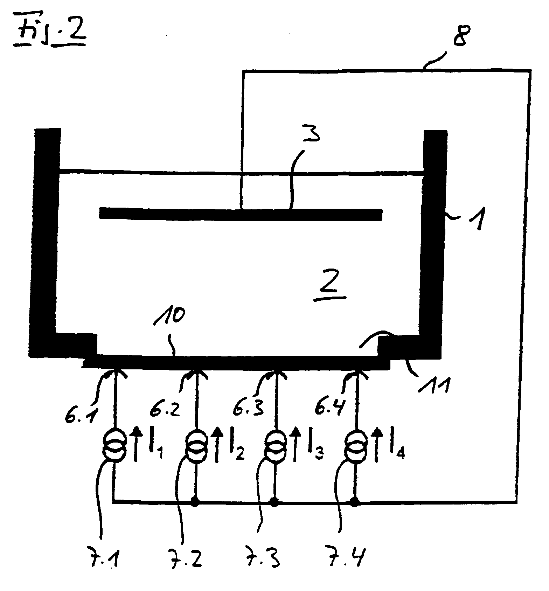

Figur 2 zeigt eine erfindungsgemäße Vorrichtung zur Bearbeitung einer großflächigen Probe. Die Vorrichtung umfaßt wiederum eine Ätzzelle 1, die mit einem Elektrolyten 2 gefüllt ist. In die Zelle wird eine gemeinsame Elektrolyt-Elektrode 3 eingetaucht. Es können statt der einen gemeinsamen Elektrolyt-Elektrode auch mehrere gemeinsame Elektrolyt-Elektroden vorhanden sein. In der Ätzzelle 1 ist gegenüber der Elektrolyt-Elektrode 3 die zu bearbeitende großflächige Probe 10 angeordnet. Sie ist hier in einer entsprechenden Öffnung 11 der Ätzzeile 4 so angeordnet, daß ihre eine Seite, die Vorderseite, nach oben zur Elektrolyt-Elektrode 3 weist und mit dem Elektrolyten 2 in Berührung steht, während ihre andere Seite, die Rückseite, über Rückseitenkontakte 6.1 - 6.4 jeweils mit einer individuellen Stromquelle 7.1 - 7.4 verbunden ist. Eine Leitung 8 verbindet die gemeinsame Elektrolyt-Elektrode 3 mit den Stromquellen 7.1 - 7.4, so daß die gemeinsame Elektrolyt-Elektrode 3 und die Proben 4.1 - 4.4 eine entgegengesetzte Polarität aufweisen. Mit dieser Vorrichtung kann eine großflächige Probe in verschiedenen Bereichen, die jeweils mit einem Rückseitenkontakt und einer diesem zugeordneten individuell steuerbaren Stromquelle kontaktiert sind, individuell bearbeitet werden.

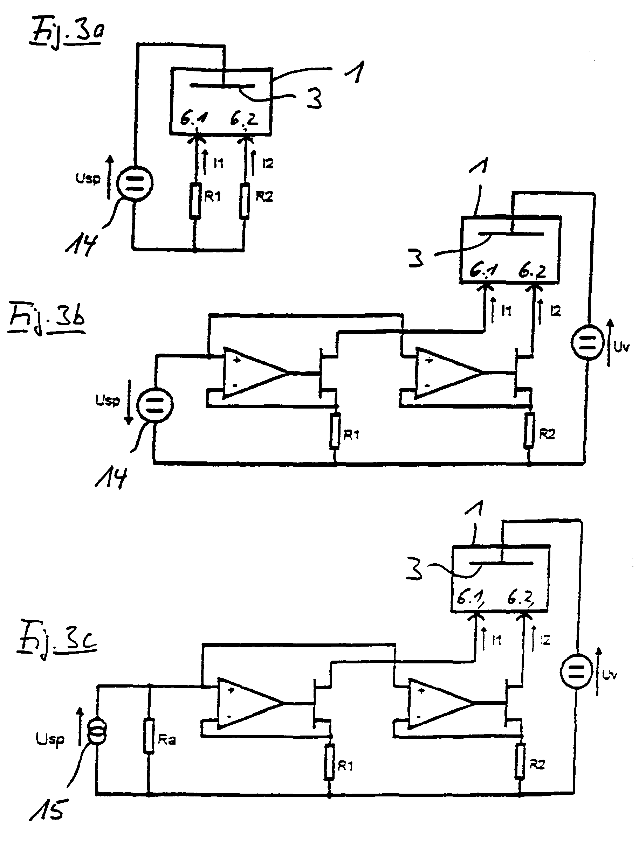

Die Figuren 3a - 3c zeigen verschiedene Stromquellenschaltungen zur steuerbaren Stromeinspeisung in die zu bearbeitende Probe oder die zu bearbeitenden Proben, wie sie bei der erfindungsgemäßen Vorrichtung Verwendung finden können. Es sind dabei aus Gründen der Übersichtlichkeit nur zwei Stromeinspeisungspunkte, das heißt Rückseitenkontakte 6.1 und 6.2 angegeben. Die Schaltungen können aber auf beliebig viele Stromeinspeisungspunkte erweitert werden.

Bei Figur 3a ist eine von außen gesteuerte Spannungsquelle 14 auf der einen Seite mit der gemeinsamen Elektrolyt-Elektrode 3 in der Ätzzelle 1 und auf der anderen Seite jeweils über einen Widerstand R1 beziehungsweise R2 mit dem jeweiligen Rückseitenkontakt 6.1 beziehungsweise 6.2 der Probe oder der Proben verbunden. Durch Verändern der Spannung Usp und der Größe der Widerstände R1, R2 können die jeweils eingespeisten Ström I1 beziehungsweise I2 individuell gesteuert werden. Wenn die Spannung Usp viel größer als der Spannungsabfall über der Ätzzelle 1 ist, so gilt näherungsweise I1 = Usp/R1 und I2= Usp/R2 .

Bei Figur 3c ist eine von außen gesteuerte Spannungsquelle 15 über eine Stromspiegelschaltung, die im wesentlichen aus zwei Operationsverstärkern und ihnen zugeordneten Widerständen R1 beziehungsweise R2 besteht, mit den Rückseitenkontakten 6.1 beziehungsweise 6.2 der Probe oder der Proben verbunden. Es ergeben sich somit zwei spannungsgesteuerte Stromquellen, für deren Ströme die Beziehungen gelten: I1 = -Usp/R1 und I2 = -Usp/R2 .

Bei Figur 3b ist eine von außen gesteuerte Stromquelle 15 über einen parallel geschalteten Widerstand Ra über eine Stromspiegelschaltung, die wiederum im wesentlichen aus zwei Operationsverstärkern und ihnen zugeordneten Widerständen R1 und R2 besteht, mit den Rückseitenkontakten 6.1 beziehungsweise 6.2 der Probe oder der Proben verbunden. Es ergeben sich somit zwei stromgesteuerte Stromquellen, für deren Ströme die Beziehungen gelten: I1 = -Isp * Ra/R1 und I2 = -Isp * Ra/R2 .

Die obigen Schaltungen steilen nur beispielhafte Schaltungen dar, mit denen die individuellen Stromquellen der erfindungsgemäßen Vorrichtung verwirklicht werden können. Es sind natürlich auch andere Stromquellenschaltungen verwendbar.

**Patentansprüche**

1. Verfahren zur elektrischen oder elektrochemischen Manipulation von Proben (4.1 - 4.4) in einer Zelle (1), die einen Elektrolyten (2) und eine darin eingetauchte Elektrolyt-Elektrode (3) oder mehrere darin eingetauchte Elektrolyt-Elektroden aufweist, **dadurch gekennzeichnet,** daß in die Zelle (1) mehrere Proben (4.1 - 4.4) eingebracht werden, wobei die mehreren Proben (4.1 - 4.4) über einen elektrischen Kontakt (6.1 - 6.4) jeweils mit Strömen ($I_1$ - $I_4$) beaufschlagt werden.

2. Verfahren nach Anspruch 1, **dadurch gekennzeichnet,** daß die den Proben (4.1 - 4.4) eingeprägte Ströme ($I_1$ - $I_4$) die gleiche Größe aufweisen.

3. Verfahren nach Anspruch 1, **dadurch gekennzeichnet,** daß die den Proben (4.1 - 4.4) eingeprägten Ströme ($I_1$ - $I_4$) unterschiedliche Größen aufweisen.

4. Verfahren nach einem der vorhergehenden Ansprüche, **dadurch gekennzeichnet,** daß die Größe der den Proben (4.1 - 4.4) eingeprägten Ströme ($I_1$ - $I_4$) zeitlich variiert wird.

5. Verfahren nach Anspruch 4, **dadurch gekennzeichnet,** daß die den Proben (4.1 - 4.4) eingeprägten Ströme ($I_1$ - $I_4$) über eine elektrische Schaltung erzeugt werden, bei welcher nur eine gemeinsame Steuerung für den zeitlichen Verlauf der Ströme benötigt wird.

6. Verfahren zur elektrischen oder elektrochemischen Manipulation einer großflächigen Probe (10) in einer Zelle (1), die einen Elektrolyten (2) und eine darin eingetauchte Elektrotyt-Elektrode (3) oder mehrere darin eingetauchte Elektrolyt-Elektroden aufweist, **dadurch gekennzeichnet,** daß die großflächige Probe (10) über mehrere elektrische Kontakte (6.1 - 6.4) mit Strömen ($I_1$ - $I_4$) beaufschlagt wird.

7. Verfahren nach Anspruch 6, **dadurch gekennzeichnet,** daß die großflächige Probe (10) mit elektrisch voneinander isolierten Probenbereichen versehen wird.

8. Verfahren nach einem der vorhergehenden Ansprüche, **dadurch gekennzeichnet,** daß es sich bei der elektrischen oder elektrochemischen Manipulation der Proben (4.1 - 4.4) um elektrochemisches Ätzen, Elektropolieren oder Galvanisieren handelt.

9. Verfahren nach einem der Ansprüche 1 bis 7, **dadurch gekennzeichnet,** daß es sich bei der Manipulation der Proben (4.1 - 4.4) um ein anodisches Ätzen zur Herstellung von porösem Silizium handelt.

10. Vorrichtung zur elektrischen oder elektrochemischen Manipulation von Proben (4.1 - 4.4) in einer mit einem Elektrolyten (2) gefüllten Zelle (1), wobei in dieser Zelle (1) eine in den Elektrolyt (2) eingetauchte Elektrolyt-Elektrode (3) oder mehrere in den Elektrolyt (2) eingetauchte Elektrolyt-Elektroden angeordnet sind, **dadurch gekennzeichnet,** daß die Proben (4.1 - 4.4) im Abstand zur einen Elektrolyt-Elektrode (3) oder den mehreren Elektrolyt-Elektroden angeordnet sind, wobei diese auf ihrer der Elektrolyt-Elektrode (3) oder den Elektrolyt-Elektroden abgewandten Seite jeweils einen elektrische Kontakt (6.1 - 6.4) aufweisen, der über elektrische Verbindungen mit außerhalb der Zelle angeordneten Stromquellenschaltungen (7.1 - 7.4) verbunden ist.

**11.** Vorrichtung zur elektrischen oder elektrochemischen Manipulation einer großflächigen Probe (10) in einer mit einem Elektrolyten (2) gefüllten Zelle (1), wobei in dieser Zelle (1) eine in den Elektrolyt (2) eingetauchte Elektrolyt-Elektrode (3) oder mehrere in den Elektrolyt (2) eingetauchte Elektrolyt-Elektroden angeordnet sind,
**dadurch gekennzeichnet,**
daß die großflächige Probe (10) im Abstand zur einen Elektrolyt-Elektrode (3) oder den mehreren Elektrolyt-Elektroden angeordnet ist, wobei auf ihrer der Elektrolyt-Elektrode (3) oder den Elektrolyt-Elektroden abgewandten Seite mehrere elektrische Kontakt (6.1 - 6.4) angeordnet sind, die über elektrische Verbindungen mit außerhalb der Zelle angeordneten Stromquellenschaltungen (7.1 - 7.4) verbunden sind.

**12.** Vorrichtung nach Anspruch 10 oder 11,
**dadurch gekennzeichnet,**
daß es sich bei den Stromquellenschaltungen (7.1 - 7.4) um Stromspiegelschaltungen handelt.

Fig. 1

Fig. 2

Fig. 3a

Fig. 3b

Fig. 3c